# FASCICULE DE BREVET EUROPEEN

(11) **EP 1 582 067 B1**
(45) Date de publication et mention de la délivrance du brevet: **16.09.2015**
(21) Numéro de dépôt: 03814513.2
(22) Date de dépôt: 31.12.2003
(51) Int. Cl.: H04N 7/14, G06F 17/30

(54) **PROCÉDÉ ET SYSTÈME POUR PRODUIRE UNE ÉDITION MULTIMÉDIA SUR LA BASE DE PRESTATIONS ORALES**
VERFAHREN UND SYSTEM ZUR HERSTELLUNG EINERMULTIMEDIA-PUBLIKATION AUF DER BASIS VON MÜNDLICHEM MATERIAL
METHOD AND SYSTEM FOR PRODUCING A MULTIMEDIA PUBLICATION ON THE BASIS OF ORAL MATERIAL

(30) Priorité: 31.12.2002 FR 0216909
(43) Date de publication de la demande: 05.10.2005
(73) Titulaire: DROIT IN SITU, 75006 Paris (FR)
(72) Inventeur: La désignation de l'inventeur n'a pas encore été déposée
(74) Mandataire: Pontet Allano & Associes
(86) Numéro de dépôt international: PCT/FR2003/003952
(87) Numéro de publication internationale: WO 2004/062285

(56) Documents cités:
- GB-A- 2 342 802
- US-A1- 2002 133 520

## Description

La présente invention concerne un procédé pour produire une édition multimédia sur la base de prestations orales. Elle vise également un système de production mettant en oeuvre ce procédé.

Par prestations orales on entend ici toutes conférences ou leçons, et tous discours et exposés, enregistrées sous forme vidéo et/ou audio.

Il existe actuellement des besoins pour une production rapide d'environnements multimédia autour de flux audio et/ou vidéo, avec des accès ciblés et des compléments d'informations synchrones.

On peut notamment citer à titre non limitatif le cas des conférences et colloques juridiques ou scientifiques qui font de plus en plus souvent l'objet d'enregistrements audio et/ou vidéo et d'une diffusion d'un support multimédia contenant à la fois les exposés des conférenciers et de documents associés à ces exposés, qui peuvent être visualisés simultanément.

Les flux audio et/ou vidéo résultant de ces enregistrements correspondent de façon générale à une information discursive:
- structurée (avec un plan complexe structuré en parties et sous-parties de différents niveaux)
- associée de façon plus ou moins directe à des données complémentaires, de nature variée, qu'il peut être pertinent de consulter ou avoir à disposition en parallèle à l'écoute du flux audio et/ou vidéo.

Ces données complémentaires sont elles-mêmes situées de façon plus ou moins précise par rapport à un moment du flux audio et/ou vidéo.

On connaît déjà par le document US2002/0133520A1 un procédé pour préparer un enregistrement multimédia d'une présentation en direct, comprenant des étapes de collecte d'informations associées à cette présentation, d'enregistrement les événements de cette présentation, de numérisation de tout enregistrement non enregistré numériquement, de transfert de ces enregistrements à un médium de stockage électronique, et de traitement de ces enregistrements pour créer une présentation multimédia numérique dans laquelle ces événements sont présentés dans des format audio et visuels qui sont automatiquement synchronisés.

Par ailleurs, il existe actuellement des procédés pour produire des éditions multimédia sur la base de prestations orales, qui mettent en oeuvre des procédures d'accès à plusieurs bases de données qui ont notamment pour conséquence d'induire pour l'utilisateur des temps de réponse qui peuvent être gênants pour une consultation, et qui nécessitent pour chaque édition multimédia une phase de développement relativement coûteuse.

Le but de la présente invention est de remédier à ces inconvénients et de proposer un procédé de production d'édition multimédia qui procure aux utilisateurs des produits multimédia, en regard des procédés de production existants, une plus grande flexibilité, une plus grande facilité d'accès aux informations, et de meilleures performances de temps de traitement, tout en présentant des coûts de réalisation significativement inférieurs à ceux induits par les procédés existants.

Cet objectif est atteint avec un procédé tel que défini à la revendication 1.

Suivant l'invention, le procédé comprend en outre une fourniture d'une pluralité de modes de présentation du flux audio et/ou vidéo et/ou des données associées et documents de référence, chaque mode de présentation résultant d'une combinaison spécifique de l'indexation du flux audio et/ou vidéo et de l'indexation des données associées et documents de référence.

Un utilisateur d'une édition multimédia produite avec le procédé selon l'invention peut ainsi sélectionner une présentation particulière parmi plusieurs présentations. De plus, le principe d'indexation mis en oeuvre dans la présente invention est double. Il y a à la fois indexation du flux audio et/ou vidéo, notamment à partir de sa structure et/ou de son plan, et de documents de référence qui sont liés à ce flux audio et/ou vidéo, ces derniers documents étant consultables in extenso, parallèlement à la vidéo.

La pluralité de modes de présentation peut avantageusement inclure un premier mode dit « Plan » correspondant à une indexation seule de parties du flux audio et/ou vidéo, un second mode dit « Plan avec documents » dans lequel des documents de référence sont intégrés chronologiquement selon l'indexation du flux audio et/ou vidéo, et un troisième mode dit « Documents » dans lequel les documents de référence sont visualisées de manière hiérarchisée et/ou classifiée.

Dans une autre forme de mise en oeuvre du procédé de production selon l'invention, la pluralité de modes de présentation inclut un premier mode de consultation dit « plan complet » comprenant des liens à tous les documents de référence ou informations complémentaires associés au flux audio et/ou vidéo.

Lorsque les documents de référence associés au flux audio et/ou vidéo sont rangés dans une pluralité de classes de documents de référence, la pluralité de modes de présentation inclut alors une pluralité d'autres modes de consultation associés chacun à une classe de documents de référence, chaque autre mode de consultation associé à une classe de documents de référence comprenant des liens auxdits documents de référence contenus dans ladite classe.

Une classe de documents de référence peut par exemple comprendre des séquences audio et/ou vidéo complémentaires du flux audio et/ou vidéo, qui peuvent être indépendantes du flux audio et/ou vidéo.

Les informations contenues dans le flux audio et/ou vidéo sont de préférence organisées pour créer un accès ciblé et une indexation de séquences audio et/ou vidéo.

Les informations contenues dans le flux audio et/ou vidéo préalablement enregistré et les documents de référence et données associées peuvent être avantageusement organisées au sein d'une structure d'information centrée sur les documents de référence, de façon à procurer à la fois (i) un accès à des séquences audio et/ou vidéo pertinentes via l'indexation du flux audio et/ou vidéo et (ii) un accès aux documents de référence via l'indexation de ces documents.

Ainsi, les documents de référence identifiés comme liés à la vidéo ne sont pas simplement mentionnés autour de la vidéo. La structure d'information, de nature matricielle avec d'une part un axe temporel de la vidéo et d'autre part plusieurs types de données, identifiées autour de la vidéo est en effet complètement transposée et en quelque sorte « inversée » pour devenir une structure d'information centrée sur les documents de référence, avec une double possibilité d'accès aux séquences audio et/ou vidéo pertinentes (indexation du flux audio et/ou vidéo), et à l'intégralité des documents de référence (schéma ou texte complet).

Dans un mode pratique de mise en oeuvre du procédé de production selon l'invention, celui-ci peut en outre comprendre :
- un stockage chronologique, dans des moyens de base de données communes, de données hétérogènes comprenant des informations sur la structure formelle d'une séquence audio et/ou vidéo contenue dans le flux audio et/ou vidéo, et des données relatives à des documents de référence associés à ladite séquence audio et/ou vidéo, et
- un traitement desdites données hétérogènes dans une feuille de tableur, suivant un axe temporel représentatif de l'écoulement du temps dans ledit flux temporel.

Avec le procédé selon l'invention, il s'agit ainsi d'exploiter l'axe temporel de la feuille de tableur. Ce procédé, imbriquant étroitement informations sur la structure du flux audio et/ou vidéo et données complémentaires associées, permet facilement selon les besoins de la matière traitée :
- de compléter/corriger les données de départ à partir d'une seule feuille de tableur simple suivant l'axe temporel du flux audio et/ou vidéo,
- de générer index et dispositifs d'accès aux fragments audio et/ou vidéo, qui partent des données complémentaires et permettent de consulter les passages audio et/ou vidéo pertinents relatifs à ces données,
- d'obtenir des listes hiérarchisées, classées de données complémentaires relatives à telle ou telle partie du flux audio et/ou vidéo,
- de raccrocher toute donnée, même si elle n'a pas été spécifiquement codée temporellement dans le temps, à un code temporel par défaut, plus ou moins précis, en utilisant les codes temporels des informations de structure/plan qui sont à sa proximité.

Dans un mode de réalisation particulier, le procédé selon l'invention comprend en outre :
- une saisie de données initiales relatives à une séquence audio et/ou vidéo au sein d'un flux audio et/ou vidéo, dans un format de feuille de tableur standard, avec leur description structurée, ces données initiales comprenant des codes temporels,
- une complétion des données initiales par des informations calculées de façon à situer chacune desdites données au sein du flux audio et/ou vidéo et de la structure de ladite séquence audio et/ou vidéo,
- un stockage chronologique, dans une base de données commune, d'informations sur la structure formelle de la séquence audio et/ou vidéo et de données complémentaires associées auxdites informations de structure, ces informations et données complémentaires constituant des données hétérogènes,
- un traitement desdites données hétérogènes dans une feuille de tableur, suivant un axe temporel représentatif de l'écoulement du temps dans ledit flux temporel, et
- des opérations de tri et d'extraction effectuées sur la feuille de tableur, pour générer une pluralité de tables prévues pour permettre un accès sélectif au contenu du flux audio et/ou vidéo.

Les tables d'accès sélectif sont par exemple générées de façon à procurer un accès au contenu du flux audio et/ou vidéo, qui est structuré par un type prédéterminé de données.

Les informations destinées à compléter les données initiales peuvent être calculées à partir d'une exploitation des données hétérogènes ordonnées temporellement dans la feuille de tableur.

Les informations calculées associées à une donnée sont de préférence agencées pour recenser des associations à cette donnée tout au long du flux audio et/ou vidéo.

Le procédé de production selon l'invention peut aussi être agencé pour procurer un accès ciblé au flux audio et/ou vidéo et aux informations associées à ce flux audio et/ou vidéo, par sélection d'un document de référence dans une table recensant les documents de référence associés audit flux audio et/ou vidéo.

Dans le cas où les documents de référence sont rangés en classes de documents de référence, on peut alors prévoir un accès ciblé au flux audio et/ou vidéo et aux informations associées à ce flux audio et/ou vidéo, par sélection d'un document dans une table de documents de référence appartenant à une classe de documents de référence parmi une pluralité de classes de documents de référence.

Suivant un autre aspect de l'invention, il est proposé un système pour produire une édition multimédia, à partir, d'une part, d'informations contenues dans un flux audio et/ou vidéo préalablement enregistré, et d'autre part, de données et de documents de référence associés auxdites informations audio et/ou vidéo, mettant en oeuvre l'invention, comprenant des moyens pour indexer du flux audio et/ou vidéo, notamment à partir de sa structure, et des moyens pour indexer lesdites données complémentaires et documents de référence, de sorte que lesdites données complémentaires et documents de référence sont consultables parallèlement au flux audio et/ou vidéo sur un équipement de visualisation, caractérisé en ce qu'il est agencé pour fournir une pluralité de modes de présentation du flux audio et/ou vidéo et/ou des données ou informations complémentaires associées et documents de référence, chaque mode de présentation résultant d'une combinaison spécifique de l'indexation du flux audio et/ou vidéo et de l'indexation des données ou informations complémentaires associées et documents de référence.

Le système de production selon l'invention peut en outre avantageusement comprendre :
- des moyens pour saisir des données initiales relatives à une séquence audio et/ou vidéo au sein d'un flux audio et/ou vidéo, dans un format de feuille de tableur standard, avec leur description structurée, ces données de départ comprenant des codes temporels,
- des moyens pour compléter des données initiales par des informations calculées de façon à situer chacune desdites données au sein du flux audio et/ou vidéo et de la structure de ladite séquence audio et/ou vidéo,
- des moyens pour stocker chronologiquement, dans une base de données commune, des informations sur la structure formelle de la séquence audio et/ou vidéo et des données complémentaires associées auxdites informations de structure, ces informations et données complémentaires constituant des données hétérogènes,
- des moyens pour traiter lesdites données hétérogènes dans une feuille de tableur, suivant un axe temporel représentatif de l'écoulement du temps dans ledit flux temporel, et
- des moyens pour générer, par des opérations de tri et d'extraction effectuées sur la feuille de tableur, une pluralité de tables prévues pour permettre un accès sélectif au contenu du flux audio et/ou vidéo.

D'autres avantages et caractéristiques de l'invention apparaîtront à l'examen de la description détaillée d'un mode de mise en oeuvre nullement limitatif, et des dessins annexés sur lesquels :
- la figure 1 illustre plusieurs types d'informations entrées dans la base, pour la mise en oeuvre du procédé selon l'invention ;
- la figure 2 illustre une obtention d'informations temporelles complémentaires à partir de la base de données hétérogènes, en utilisant l'axe « vertical » de la feuille de tableur ;
- la figure 3 illustre une ré-exploitation de la base de données initiale pour permettre l'accès ciblé au flux audio et/ou vidéo selon un certain type de données ;
- la figure 4 représente un exemple de structure d'un système de production d'édition multimédia selon l'invention ;
- les figures 5 à 7 représentent des interfaces graphiques utilisateur d'un premier exemple de produit multimédia obtenu avec le procédé selon l'invention, et correspondant respectivement à trois modes distincts de présentation ; et
- les figures 8 à 10 représentent des interfaces graphiques d'un second exemple de produit multimédia obtenu avec le procédé selon l'invention.

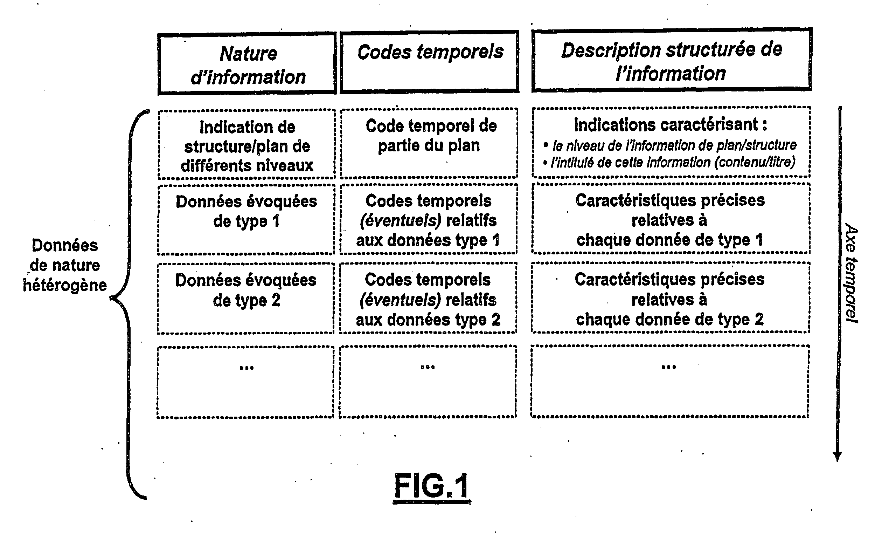

On va tout d'abord décrire le mécanisme de traitement des données hétérogènes mis en oeuvre dans procédé selon l'invention. Les données de départ sont rentrées ou saisies dans un format de feuille de tableur standard, avec leur description structurée, en référence à la figure 1. Les codes temporels (timecodes) sont des données centrales et génériques, mais qui ne sont pas requises de manière contraignante pour toutes les données.

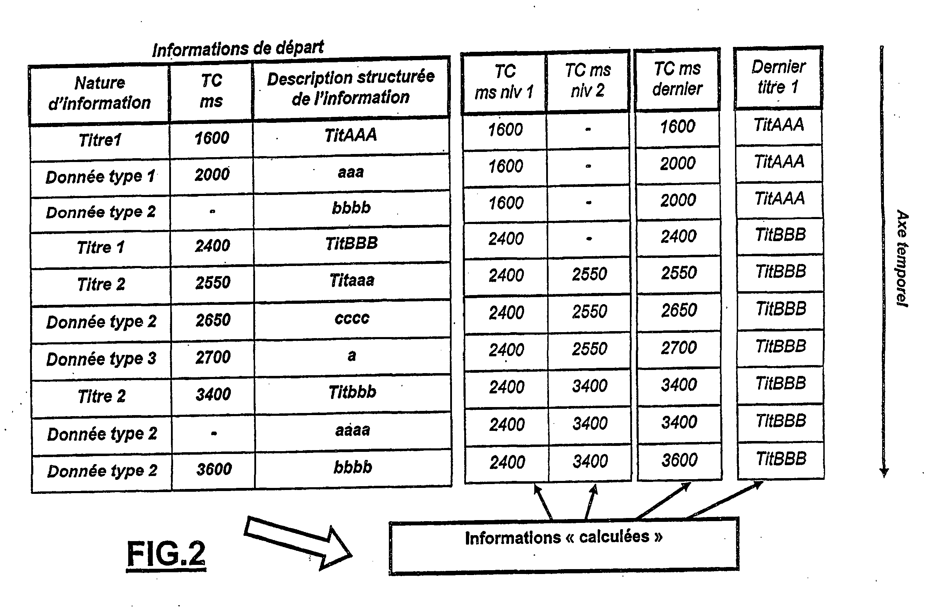

Les données de départ sont complétées par des informations calculées, en référence à la figure 2, qui situent chaque donnée au sein du flux audio et/ou vidéo et de sa structure identifiée.

Les informations calculées, notamment un repérage temporel des données, sont déduites à partir de l'exploitation des données hétérogènes, ordonnées dans le temps qui constitue l'axe vertical de la feuille de tableur.

Cette exploitation est rendue possible de façon simple en analysant les informations selon l'axe temporel pour toutes ces données (pourtant hétérogènes) de proche en proche. Les informations « descendent » ou « remontent » en suivant l'axe temporel.

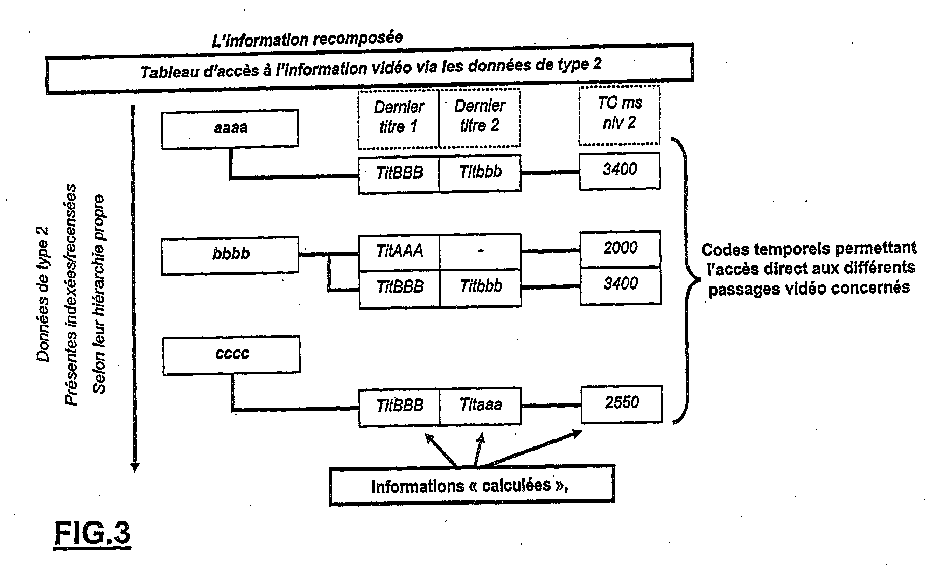

Des opérations de tri et d'extraction simple sur la feuille de tableur ainsi complétée permettent d'aboutir à des tables permettant un accès ciblé, structuré par tel ou tel type de données, à la matière audio et/ou vidéo, comme l'illustre l'exemple de la figure 3.

Les informations calculées, que la structure de la feuille de tableur a permis d'associer à chaque donnée, permettent de recenser toute association à cette donnée tout au long du flux audio et/ou vidéo, en la situant dans celui-ci et d'y accéder directement, en privilégiant le niveau de code temporel adapté.

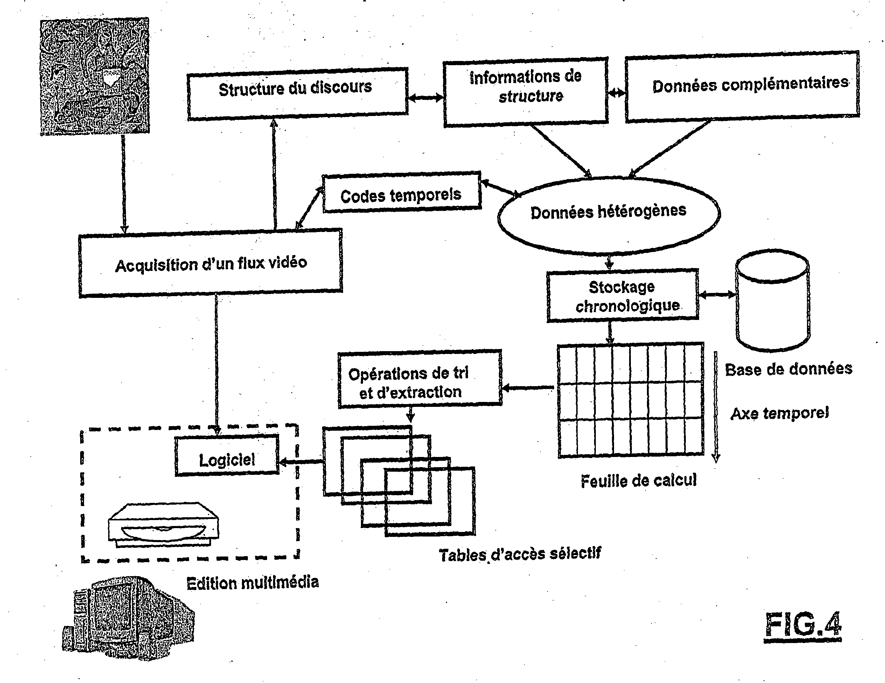

On va maintenant décrire, en référence à la figure 4, un exemple de mise en oeuvre d'un système de production d'une édition multimédia selon l'invention. Une conférence est tout d'abord enregistrée sous la forme d'un flux oral (vidéo et/ou audio). Il s'agit d'une activité de production audiovisuelle (captation, montage).

A cette conférence est associée la structure d'un discours, par exemple le plan de ce discours, décrite par des informations de structure auxquelles sont associées des données complémentaires telles que des références de publications ou d'articles cités par le conférencier. Il peut s'agir aussi bien par exemple de définitions de mots ou de concepts utilisés dans le flux oral principal, ou même de liens multimédia à des séquences audio et/ou vidéo complémentaires du flux oral principal, constituant un approfondissement de celui-ci, tout en restant indépendant.

L'ensemble des informations de structure et des données complémentaires, qui constitue des données hétérogènes, est recensé de manière chronologique dans une feuille de tableur-Il s'agit d'une étape de production « métier » de structuration et de saisie.

Les données hétérogènes sont traitées, au moyen d'un logiciel tableur du marché ou développé spécifiquement, dans une feuille de tableur. Des opérations de tri et d'extraction effectuées sur des données particulières de l'ensemble des données hétérogènes permettent de générer, à partir de la feuille de tableur, un ensemble de tables d'accès sélectif conçues pour permettre un accès ciblé à des fragments sélectionnés de la séquence concernée au sein du flux audio et/ou vidéo. Ce procédé de génération de tables d'accès sélectifs peut être automatisé.

L'édition multimédia produite avec le système selon l'invention consiste en la combinaison d'un flux audio et/ou vidéo enregistré numériquement sur un support tel qu'un CD-ROM ou tout autre support numérique, de l'ensemble des tables d'accès sélectif issues de la feuille de tableur, et d'un logiciel d'exploitation de ces tables.

L'utilisateur d'une édition multimédia obtenue avec le procédé de production selon l'invention dispose d'un outil interactif lui permettant de disposer, sur une même page écran, d'une première fenêtre de diffusion d'un flux audio et/ou vidéo et d'une seconde fenêtre de visualisation de données et d'informations en relation avec la séquence vidéo en cours de diffusion. De nombreux modes d'accès peuvent alors être envisagés pour exploiter pleinement les avantages procurés par le procédé d'organisation selon l'invention. On peut alors proposer de très nombreuses fonctionnalités telles que le suivi en temps réel du plan de conférence ou l'accès en temps réel à des références bibliographiques en relation avec le discours du conférencier.

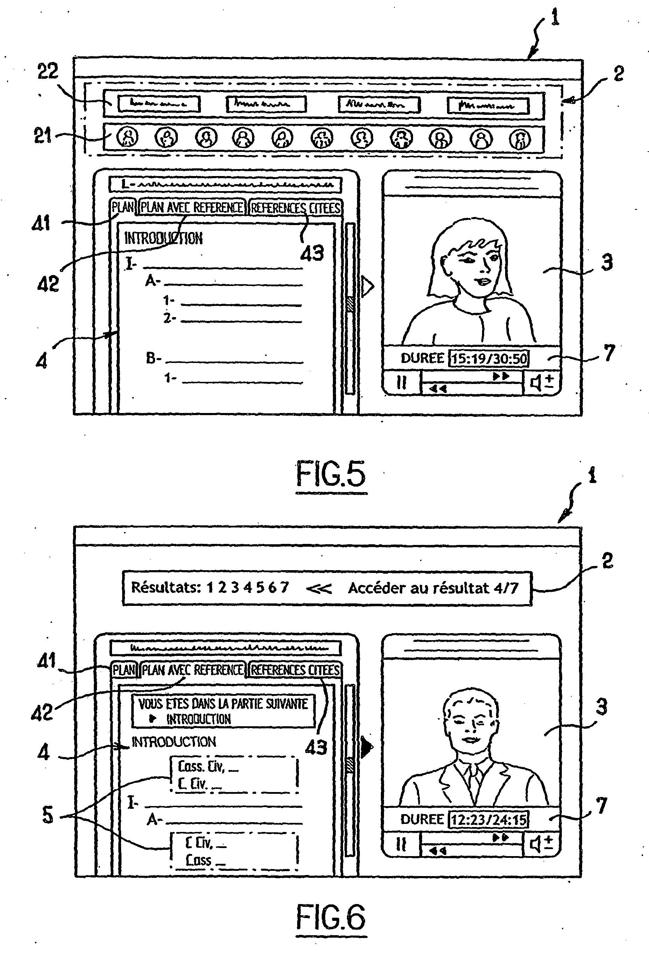

On va maintenant décrire, en référence aux figures 5 à 7, des exemples de pages écran, sous la forme d'interfaces graphiques utilisateur, d'un produit multimédia obtenu avec le procédé de production selon l'invention à partir d'une conférence juridique, en même temps que des fonctionnalités procurées à l'utilisateur de ce produit multimédia.

Un utilisateur d'un produit multimédia obtenu avec le procédé selon l'invention peut accéder, en référence à la figure 1, à une page écran 1 comprenant un ensemble 2 de barres d'outils et de commandes, une première fenêtre 3 de visualisation d'une séquence vidéo, pourvues de fonctions de commande vidéo usuelles (pause, avance ou retour rapide, réglage du son et compteur de durée), et une seconde fenêtre 4 de visualisation simultanée d'un document de référence.

Les barres d'outils et de commande comprennent une première barre 21 pour accéder à chacune des interventions disponibles dans le produit multimédia, par exemple sous la forme d'icônes photographiques de chacun des intervenants, et une seconde barre 22 regroupant différentes possibilités d'accès offertes à un utilisateur du produit multimédia :
- accès par intervenants,
- accès par réglementation,
- accès par jurisprudence,
- intégralité des sources,
- bibliographie.

La fenêtre 4 de visualisation de document est pourvue sur sa partie supérieure d'un premier onglet 41 « Plan », d'un second onglet 42 « Plan avec référence », et d'un troisième onglet 43 « Références citées ».

Dans le cas précis de la figure 5, c'est l'onglet « Plan » qui a été activé et l'utilisateur voit ainsi défiler, en même temps que le déroulement de la séquence vidéo, le plan du discours du conférencier ou de la conférencière. Dans ce mode Plan, un utilisateur peut se situer à tout moment dans le déroulement du discours du conférencier et en particulier de son argumentation. Il peut aussi naviguer au sein de la conférence ou de l'intervention, en cliquant sur des éléments de plan dans la fenêtre de visualisation de documents. Il est à noter que la structure d'ensemble de la conférence ou de l'intervention reste visible en permanence.

Dans le mode de visualisation « Plan avec références » illustré par la figure 6, l'utilisateur peut visualiser des références juridiques 5, intégrées au plan de l'intervenant. Dans ce mode, il est toujours possible d'accéder à un passage vidéo précis en cliquant sur une subdivision du plan, ou d'accéder au texte intégral de références juridiques, jurisprudentielles et réglementaires.

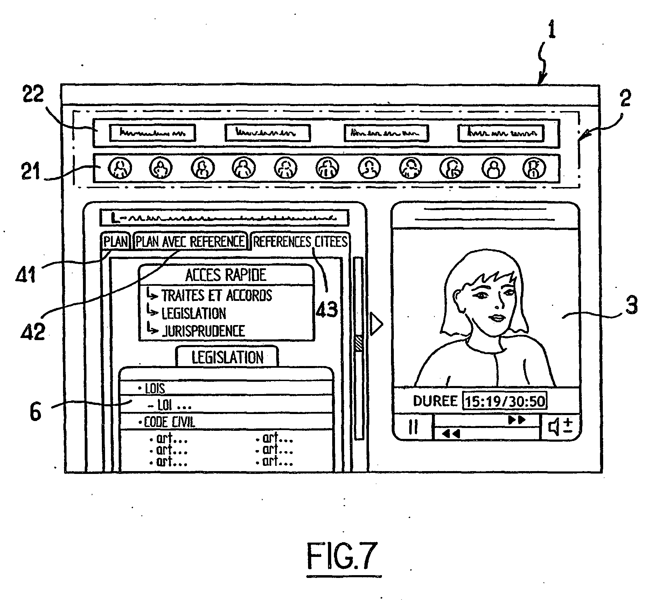

Dans le mode de visualisation « Références citées » illustré par la figure 7, l'ensemble des références juridiques d'un intervenant sont regroupées et classées selon une hiérarchie des normes relatives au contenu de cette édition multimédia. Un utilisateur peut ainsi se référer à des données juridiques textuelles 6 liées à l'intervention, et par un simple clic sur une référence accéder au texte intégral de cette référence.

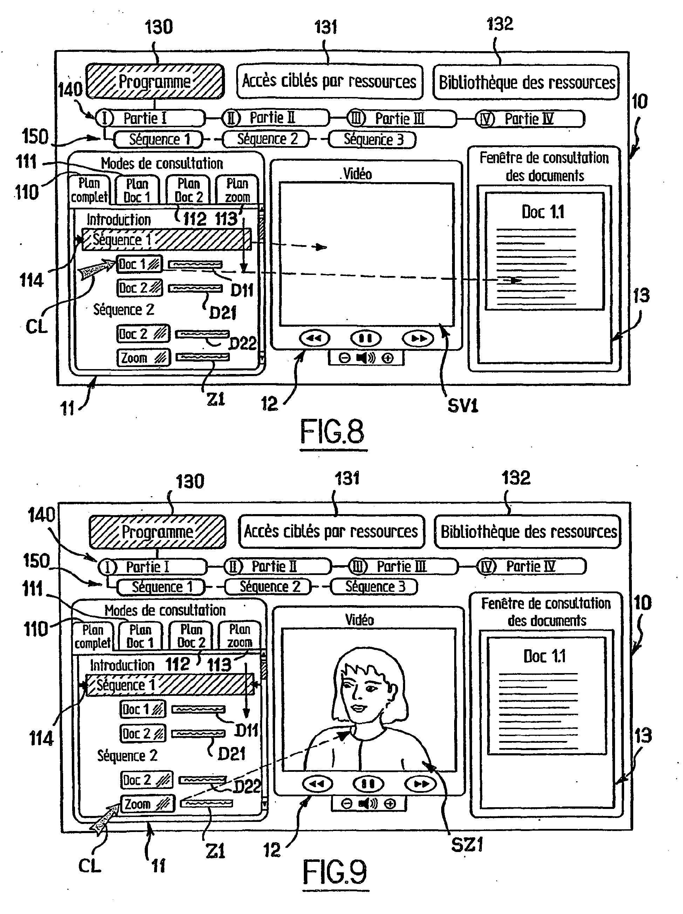

On va maintenant décrire, en référence aux figures 8 à 10, un second exemple de réalisation d'un produit multimédia obtenu avec un procédé de production selon l'invention.

Une première interface graphique utilisateur 10 associée à cet exemple de réalisation comprend, en référence aux figures 8 et 9 :
- trois icônes de sélection de fonction 130, 131, 132 : « Programme », « Accès ciblés ressources », « Bibliothèque des ressources »,
- une visualisation 140 des différentes parties I, II, III, IV d'une prestation orale,
- une visualisation 150 d'une suite de séquences d'une partie I de la prestation orale,
- une première fenêtre 11 de visualisation des modes de consultation,
- une seconde fenêtre 12 de visualisation des séquences vidéo, et
- une troisième fenêtre 13 de consultation de documents de référence.

La fenêtre de visualisation 11 comprend dans sa partie supérieure plusieurs onglets de sélection de modes de consultation :
- un premier mode de consultation « plan complet » 110 permettant de visualiser la liste des séquences vidéo et de l'ensemble des documents de référence et informations complémentaires associées à ces séquences vidéo,
- un second mode de consultation « plan avec Doc 1 » 111 permettant de visualiser la liste des séquences vidéo et des seuls documents de référence appartenant à une première classe de documents de référence,

- un troisième mode de consultation « plan avec Doc 2 » 112 permettant de visualiser la liste des séquences vidéo et des seuls documents de référence appartenant à une seconde classe de documents de référence, et
- un quatrième mode de consultation « plan avec Zoom » 113 permettant de visualiser la liste des séquences vidéo et des seuls documents d'approfondissement appartenant à une classe de documents dits « Zoom d'approfondissement » de séquences vidéo.

A titre d'exemple non limitatif, dans le cadre d'un produit multimédia issu d'une prestation orale dans le domaine juridique, la première classe de documents de référence peut correspondre à des « mots » du Droit, tandis que la deuxième classe de documents de référence peut correspondre à des « clauses » du Droit.

Lorsque l'onglet 110 « Plan complet » a été sélectionné, on visualise dans la première fenêtre le plan complet de la prestation incluant par exemple une séquence 1 à laquelle sont associés un document de référence D11 appartenant à la première classe de documents et un document de référence D21 appartenant à la seconde classe de documents, et une séquence 2 à laquelle sont associés un document de référence D22 appartenant à la seconde classe de documents et un document Zoom Z1.

Lorsque le flux vidéo se déroule temporellement, un curseur 114 pointe sur la séquence 1 en cours de visualisation SV1 dans la fenêtre vidéo 12. Si l'utilisateur sélectionne par un pointage et cliquage CL sur l'icône Doc1 correspondant au document de référence D11, apparaît alors dans la fenêtre de consultation 13 le contenu du document de référence sélectionné.

Si l'utilisateur sélectionne et clique sur l'icône Zoom présente dans la séquence 2 comme l'illustre la figure 9, apparaît alors dans la fenêtre vidéo 12 une séquence vidéo complémentaire SZ1 correspondant à un approfondissement d'un point particulier de la séquence vidéo 2.

Il est à noter que l'on peut prévoir d'autres agencements des onglets que celui illustré dans les figures 8 et 9. En particulier, on peut prévoir un onglet « plan complet » englobant plusieurs sous-onglets « plan avec documents ».

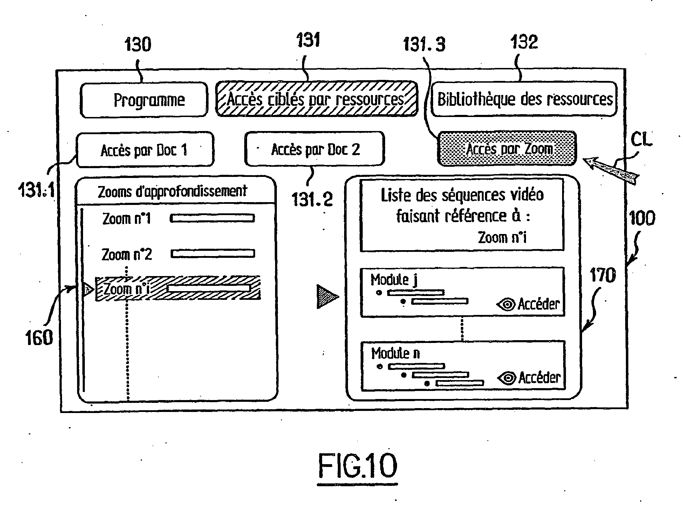

Une seconde interface graphique utilisateur 100 du produit multimédia réalisé avec le procédé selon l'inventioin, correspond à une sélection de la fonction 131 « Accès ciblés par ressources », en référence à la figure 10. Cette sélection provoque une visualisation de plusieurs modes d'accès :
- un mode 131.1 d'accès par des documents de référence appartenant à la première classe de documents de référence, par exemple des documents associés à des « mots » du Droit,
- un mode 131.2 d'accès par des documents de référence appartenant à la seconde classe de documents de référence, par exemple des documents associés à des « clauses » du Droit, et
- un mode 131.3 d'accès par des documents de « Zoom ».

Si un utilisateur sélectionne et clique CL sur l'icône 131.3 « Accès par Zoom », apparaît alors dans une première fenêtre 160 une liste des zooms d'approfondissement existant dans le produit multimédia : Zoom n°1, Zoom n°2,...,Zoom n°i,...

Une sélection d'un Zoom n°i particulier à l'intérieur de cette liste conduit à une visualisation dans une seconde fenêtre 170 d'une liste de séquences vidéo faisant référence à ce Zoom n°i, par exemple une séquence vidéo incluse dans un module j avec le chemin d'accès à cette séquence, et une autre séquence vidéo incluse dans un module n avec le chemin d'accès correspondant. Une action de l'utilisateur sur une icône « Accéder » de l'un de ses modules a pour effet d'accéder au flux vidéo directement au niveau du module sélectionné.

D'autres classes de documents de référence que ceux qui viennent d'être décrits peuvent être envisagés dans le cadre de la présente invention. On peut par exemple prévoir un « plan avec bibliographie » dans lequel les documents de référence sont constitués par des références bibliographiques, ainsi qu'un « plan avec questions-réponses » dans lequel les documents de référence sont constitués par des séquences « question-réponse ».

A chacune de ces classes de documents de référence, peut correspondre un mode d'accès spécifique au contenu du flux audio et/ou vidéo par des documents de référence appartenant à cette classe. On peut ainsi prévoir un mode d'accès par référence bibliographique et un mode d'accès par séquence « question-réponse ».

Le procédé de production selon l'invention peut être avantageusement mis en oeuvre dans les domaines des conférences juridiques, scientifiques et notamment médicales, ainsi que dans le domaine de l'information médicale. On peut aussi prévoir des applications de la formation ou de l'enseignement par voie électronique ou « e-learning ». Outre son utilisation individuelle, l'application dans un cadre collectif (par exemple vidéo-projection) est possible.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour produire une édition multimédia sur la base de prestations orales, à partir, d'une part, d'informations contenues dans un flux audio et/ou vidéo préalablement enregistré, et d'autre part, de données ou informations complémentaires et de documents de référence associés auxdites informations audio et/ou vidéo, comprenant à la fois une indexation du flux audio et/ou vidéo, à partir de sa structure, et une indexation desdites données ou informations complémentaires et documents de référence, de sorte que lesdites données complémentaires et documents de référence sont visualisables parallèlement au flux audio et/ou vidéo sur un équipement de visualisation, **caractérisé en ce qu'**il comprend en outre une fourniture d'une pluralité de modes de présentation du flux audio et/ou vidéo et/ou des données ou informations complémentaires associées et documents de référence, chaque mode de présentation résultant d'une combinaison spécifique de l'indexation du flux audio et/ou vidéo et de l'indexation des données ou informations complémentaires associées et documents de référence et **en ce que** les informations contenues dans le flux audio et/ou vidéo préalablement enregistré et les documents de référence et données associées sont organisées au sein d'une structure d'information de nature matricielle avec d'une part un axe temporel de la vidéo et d'autre part plusieurs types de données, cette structure d'information est centrée sur les documents de référence, ces documents de référence permettent d'accéder à la fois (i) aux séquences audio et/ou vidéo pertinentes via l'indexation structurelle du flux audio et/ou vidéo et (ii) à l'intégralité des documents de référence via l'indexation de ces documents.

2. Procédé selon la revendication 1, **caractérisé en ce que** la pluralité de modes de présentation inclut un premier mode dit « Plan » correspondant à une indexation seule de parties du flux audio et/ou vidéo.

3. Procédé selon l'une des revendications 1 ou 2, **caractérisé en ce que** la pluralité de modes de présentation inclut un second mode dit « Plan avec documents » dans lequel des documents de référence sont intégrés chronologiquement selon l'indexation du flux audio et/ou vidéo.

4. Procédé selon l'une des revendications 1 à 3, **caractérisé en ce que** la pluralité de modes de présentation inclut un troisième mode dit « Documents » dans lequel les documents de référence sont visualisés de manière hiérarchisée et/ou classifiée.

5. Procédé selon la revendication 1, **caractérisé en ce que** la pluralité de modes de présentation inclut un premier mode de consultation dit « plan complet » comprenant des liens à tous les documents de référence ou informations complémentaires associés au flux audio et/ou vidéo.

6. Procédé selon la revendication 5, dans lequel les documents de référence associés au flux audio et/ou vidéo sont rangés dans une pluralité de classes de documents de référence, **caractérisé en ce que** la pluralité de modes de présentation inclut une pluralité d'autres modes de consultation associés chacun à une classe de documents de référence, chaque autre mode de consultation associé à une classe de documents de référence comprenant des liens auxdits documents de référence contenus dans ladite classe.

7. Procédé selon la revendication 6, **caractérisé en ce qu'**une classe de documents de référence comprend des séquences audio et/ou vidéo complémentaires du flux audio et/ou vidéo.

8. Procédé selon la revendication 7, **caractérisé en ce que** les séquences audio et/ou vidéo complémentaires sont indépendantes du flux audio et/ou vidéo.

9. Procédé selon l'une des revendications précédentes, **caractérisé en ce que** les informations contenues dans le flux audio et/ou vidéo sont organisées pour créer un accès ciblé et une indexation de séquences audio et/ou vidéo.

10. Procédé selon l'une des revendications précédentes, **caractérisé en ce qu'**il comprend en outre :
- un stockage chronologique, dans des moyens de base de données commune, de données hétérogènes comprenant des informations sur la structure formelle d'une séquence audio et/ou vidéo contenue dans le flux audio et/ou vidéo, et des données relatives à des documents de référence associés à ladite séquence audio et/ou vidéo, et
- un traitement desdites données hétérogènes dans une feuille de tableur, suivant un axe temporel représentatif de l'écoulement du temps dans ledit flux temporel.

11. Procédé selon la revendication 10, **caractérisé en ce qu'**il comprend en outre une génération d'index de moyens d'accès à des fragments de la séquence audio et/ou vidéo, à partir des données complémentaires, de façon à procurer un consultation de passages audio et/ou vidéo associés à ces données complémentaires.

12. Procédé selon l'une des revendications 10 ou 11, **caractérisé en ce qu'**il comprend en outre une fourniture de liste hiérarchisées et classées de données complémentaire relatives à des parties déterminées du flux audio et/ou vidéo.

13. Procédé selon l'une des revendications 10 à 12, **caractérisé en ce qu'**il comprend en outre une attribution à toute donnée du flux temporel non préalablement codée temporellement, d'un code temporel par défaut.

14. Procédé selon la revendication 13, **caractérisé en ce que** l'attribution à une donnée non préalablement codée temporellement d'un code temporel par défaut est effectuée en utilisant des codes temporels d'informations sur la structure formelle de la séquence audio et/ou vidéo, situées à proximité de ladite donnée non préalablement codée temporellement.

15. Procédé selon l'une quelconque des revendications précédentes, **caractérisé en ce qu'**il comprend en outre:
- une saisie de données initiales relatives à une séquence audio et/ou vidéo au sein d'un flux audio et/ou vidéo, dans un format de feuille de tableur standard, avec leur description structurée, ces données initiales comprenant des codes temporels,
- une complétion des données initiales par des informations calculées de façon à situer chacune desdites données au sein du flux audio et/ou vidéo et de la structure de ladite séquence audio et/ou vidéo,
- un recensement chronologique, dans une base de données commune, d'informations sur la structure formelle de la séquence audio et/ou vidéo et de données complémentaires associées auxdites informations de structure, ces informations et données complémentaires constituant des données hétérogènes,
- un traitement desdites données hétérogènes dans une feuille de tableur, suivant un axe temporel représentatif de l'écoulement du temps dans ledit flux temporel, et
- des opérations de tri et d'extraction effectuées sur la feuille de tableur, pour générer une pluralité de tables prévues pour permettre un accès sélectif au contenu du flux audio et/ou vidéo.

16. Procédé selon la revendication 15, **caractérisé en ce que** les tables d'accès sélectif sont générées de façon à procurer un accès au contenu du flux audio et/ou vidéo, qui est structuré par un type prédéterminé de données.

17. Procédé selon l'une des revendications 15 ou 16, **caractérisé en ce que** les informations destinées à compléter les données initiales sont calculées à partir d'une exploitation des données hétérogènes ordonnées temporellement dans la feuille de tableur.

18. Procédé selon l'une des revendications 15 à 17, **caractérisé en ce que** les informations calculées associées à une donnée sont agencées pour recenser des associations à cette donnée tout au long du flux audio et/ou vidéo.

19. Procédé selon l'une quelconque des revendications précédentes, **caractérisé en ce qu'**il est agencé pour procurer un accès ciblé au flux audio et/ou vidéo et aux informations associées à ce flux audio et/ou vidéo, par sélection d'un document de référence dans une table recensant les documents de référence associés audit flux audio et/ou vidéo.

20. Procédé selon la revendication 19 et la revendication 6, **caractérisé en ce qu'**il est agencé pour procurer un accès ciblé au flux audio et/ou vidéo et aux informations associées à ce flux audio et/ou vidéo, par sélection d'un document dans une table de documents de référence appartenant à une classe de documents de référence parmi une pluralité de classes de documents de référence.

21. Système pour produire une édition multimédia sur la base de prestations orales, à partir, d'une part, d'informations contenues dans un flux audio et/ou vidéo préalablement enregistré, et d'autre part, de données et de documents de référence associés auxdites informations audio et/ou vidéo, mettant en oeuvre le procédé selon l'une quelconque des revendications précédentes, comprenant des moyens pour indexer du flux audio et/ou vidéo, à partir de sa structure, et des moyens pour indexer lesdites données complémentaires et documents de référence, de sorte que lesdites données complémentaires et documents de référence sont visualisables parallèlement au flux audio et/ou vidéo sur un équipement de visualisation, **caractérisé en ce qu'**il est agencé pour fournir une pluralité de modes de présentation du flux audio et/ou vidéo et/ou des données ou informations complémentaires associées et documents de référence, chaque mode de présentation résultant d'une combinaison spécifique de l'indexation du flux audio et/ou vidéo et de l'indexation des données ou informations complémentaires associées et documents de référence et **en ce que** les informations contenues dans le flux audio et/ou vidéo préalablement enregistré et les documents de référence et données associées sont organisées au sein d'une structure d'information de nature matricielle avec d'une part un axe temporel de la vidéo et d'autre part plusieurs types de données, cette structure d'information est centrée sur les documents de référence, ces documents de référence permettent d'accéder à la fois (i) aux séquences audio et/ou vidéo pertinentes via l'indexation structurelle du flux audio et/ou vidéo et (ii) à l'intégralité des documents de référence via l'indexation de ces documents.

22. Système selon la revendication 21, **caractérisé en ce qu'**il comprend en outre :
- des moyens pour saisir des données initiales relatives à une séquence audio et/ou vidéo au sein d'un flux audio et/ou vidéo, dans un format de feuille de tableur standard, avec leur description structurée, ces données de départ comprenant des codes temporels,
- des moyens pour compléter des données initiales par des informations calculées de façon à situer chacune desdites données au sein du flux audio et/ou vidéo et de la structure de ladite séquence audio et/ou vidéo,
- des moyens pour stocker chronologiquement, dans une base de données commune, des informations sur la structure formelle de la séquence audio et/ou vidéo et des données complémentaires associées auxdites informations de structure, ces informations et données complémentaires constituant des données hétérogènes,
- des moyens pour traiter lesdites données hétérogènes dans une feuille de tableur, suivant un axe temporel représentatif de l'écoulement du temps dans ledit flux temporel, et
- des moyens pour générer, par des opérations de tri et d'extraction effectuées sur la feuille de tableur, une pluralité de tables prévues pour permettre un accès sélectif au contenu du flux audio et/ou vidéo.

## Patentansprüche

1. Verfahren zum Erzeugen einer Multimedia-Publikation auf der Grundlage mündlicher Darbietungen, anhand einerseits von Informationen, die in einem zuvor aufgezeichneten Audio- und/oder Videostream enthalten sind, sowie andererseits von ergänzenden Daten oder Informationen und von Referenzdokumenten, die den Audio-und/oder Videoinformationen zugeordnet sind, umfassend sowohl ein Indexieren des Audio- und/oder Videostreams anhand seiner Struktur als auch ein Indexieren der ergänzenden Daten oder Informationen und Referenzdokumente, so dass die ergänzenden Daten und Referenzdokumente parallel zu dem Audio- und/oder Videostream auf einer Anzeigeeinrichtung darstellbar sind, **dadurch gekennzeichnet, dass** es ferner eine Bereitstellung einer Vielzahl von Präsentationsmodi des Audio-und/oder Videostreams und/oder der zugeordneten ergänzenden Daten oder Informationen und Referenzdokumente umfasst, wobei jeder Präsentationsmodus aus einer spezifischen Kombination der Indexierung des Audio- und/oder Videostreams und der Indexierung der zugeordneten ergänzenden Daten oder Informationen und Referenzdokumente resultiert, und dass die in dem zuvor aufgezeichneten Audio-und/oder Videostream enthaltenen Informationen und die Referenzdokumente und zugeordneten Daten innerhalb einer matrixartigen Informationsstruktur mit einerseits einer Zeitachse des Videos und andererseits mehreren Datentypen organisiert sind, diese Informationsstruktur um die Referenzdokumente zentriert ist, diese Referenzdokumente ermöglichen, sowohl (i) auf die relevanten Audio- und/oder Videosequenzen über die strukturelle Indexierung des Audio- und/oder Videostreams als auch (ii) auf die Gesamtheit der Referenzdokumente über die Indexierung dieser Dokumente zuzugreifen.

2. Verfahren nach Anspruch 1, **dadurch gekennzeichnet, dass** die Vielzahl von Präsentationsmodi einen ersten sogenannten "Plan"-Modus enthält, der einer Indexierung nur von Teilen des Audio- und/oder Videostreams entspricht.

3. Verfahren nach einem der Ansprüche 1 oder 2, **dadurch gekennzeichnet, dass** die Vielzahl von Präsentationsmodi einen zweiten sogenannten "Plan mit Dokumenten"-Modus enthält, bei dem Referenzdokumente entsprechend der Indexierung des Audio- und/oder Videostreams chronologisch eingebunden sind.

4. Verfahren nach einem der Ansprüche 1 bis 3, **dadurch gekennzeichnet, dass** die Vielzahl von Präsentationsmodi einen dritten sogenannten "Dokumente"-Modus enthält, bei dem die Referenzdokumente hierarchisch gegliedert und/oder klassifiziert dargestellt sind.

5. Verfahren nach Anspruch 1, **dadurch gekennzeichnet, dass** die Vielzahl von Präsentationsmodi einen ersten sogenannten "vollständiger Plan"-Abfragemodus enthält, der Verknüpfungen mit allen Referenzdokumenten oder ergänzenden Informationen, die dem Audio- und/oder Videostream zugeordnet sind, umfasst.

6. Verfahren nach Anspruch 5, wobei die Referenzdokumente, die dem Audio- und/oder Videostream zugeordnet sind, in einer Vielzahl von Referenzdokumentenklassen eingeordnet sind, **dadurch gekennzeichnet, dass** die Vielzahl von Präsentationsmodi eine Vielzahl von weiteren Abfragemodi, die jeweils einer Referenzdokumentenklasse zugeordnet sind, enthält, wobei jeder weitere Abfragemodus, der einer Referenzdokumentenklasse zugeordnet ist, Verknüpfungen mit den in der Klasse enthaltenen Referenzdokumenten umfasst.

7. Verfahren nach Anspruch 6, **dadurch gekennzeichnet, dass** eine Referenzdokumentenklasse ergänzende Audio- und/oder Videosequenzen des Audio- und/oder Videostreams umfasst.

8. Verfahren nach Anspruch 7, **dadurch gekennzeichnet, dass** die ergänzenden Audio- und/oder Videosequenzen von dem Audio- und/oder Videostream unabhängig sind.

9. Verfahren nach einem der vorhergehenden Ansprüche, **dadurch gekennzeichnet, dass** die in dem Audio- und/oder Videostream enthaltenen Informationen organisiert sind, um einen gezielten Zugriff und eine Indexierung von Audio- und/oder Videosequenzen zu erzeugen.

10. Verfahren nach einem der vorhergehenden Ansprüche, **dadurch gekennzeichnet, dass** es ferner umfasst:
- eine chronologische Speicherung, in gemeinsamen Datenbankmitteln, von heterogenen Daten, die Informationen über die Formalstruktur einer in dem Audio- und/oder Videostream enthaltenen Audio- und/oder Videosequenz sowie Daten zu Referenzdokumenten, die der Audio- und/oder Videosequenz zugeordnet sind, umfassen, und
- eine Verarbeitung der heterogenen Daten in einem Tabellenkalkulationsblatt entlang einer Zeitachse, die für den Ablauf der Zeit in dem Zeitstrom repräsentativ ist.

11. Verfahren nach Anspruch 10, **dadurch gekennzeichnet, dass** es ferner eine Indexgenerierung von Mitteln zum Zugriff auf Fragmente der Audio- und/oder Videosequenz anhand der ergänzenden Daten umfasst, um zu einer Abfrage von Audio- und/oder Videopassagen, die diesen ergänzenden Daten zugeordnet sind, zu verhelfen.

12. Verfahren nach einem der Ansprüche 10 oder 11, **dadurch gekennzeichnet, dass** es ferner eine Bereitstellung von hierarchisch gegliederten und klassifizierten Listen von ergänzenden Daten bezüglich bestimmter Teile des Audio- und/oder Videostreams umfasst.

13. Verfahren nach einem der Ansprüche 10 bis 12, **dadurch gekennzeichnet, dass** es ferner eine Zuweisung eines Standardzeitcodes zu jeder nicht zuvor zeitlich codierten Angabe des Zeitstroms umfasst.

14. Verfahren nach Anspruch 13, **dadurch gekennzeichnet, dass** die Zuweisung eines Standardzeitcodes zu einer nicht zuvor zeitlich codierten Angabe unter Verwendung von Zeitcodes von Informationen über die Formalstruktur der Audio- und/oder Videosequenz, die in der Nähe der nicht zuvor zeitlich codierten Angabe gelegen sind, durchgeführt wird.

15. Verfahren nach einem der vorhergehenden Ansprüche, **dadurch gekennzeichnet, dass** es ferner umfasst:
- eine Erfassung von Ausgangsdaten bezüglich einer Audio- und/oder Videosequenz innerhalb eines Audio- und/oder Videostreams, in einem Standardtabellenkalkulationsblattformat, mit ihrer strukturierten Beschreibung, wobei diese Ausgangsdaten Zeitcodes umfassen,
- eine Komplettierung der Ausgangsdaten durch berechnete Informationen, um jede der Daten innerhalb des Audio- und/oder Videostreams und der Struktur der Audio- und/oder Videosequenz einzuordnen,
- eine chronologische Erfassung von Informationen über die Formalstruktur der Audio- und/oder Videosequenz und von ergänzenden Daten, die den Strukturinformationen zugeordnet sind, in einer gemeinsamen Datenbank, wobei diese Informationen und ergänzenden Daten heterogene Daten bilden,
- eine Verarbeitung der heterogenen Daten in einem Tabellenkalkulationsblatt entlang einer Zeitachse, die für den Ablauf der Zeit in dem Zeitstrom repräsentativ ist, und
- Sortier- und Extraktionsvorgänge, die an dem Tabellenkalkulationsblatt vorgenommen werden, um eine Vielzahl von Tabellen zu generieren, die dazu vorgesehen sind, einen selektiven Zugriff auf den Inhalt des Audio- und/oder Videostreams zu ermöglichen.

16. Verfahren nach Anspruch 15, **dadurch gekennzeichnet, dass** die Tabellen zum selektiven Zugriff derart generiert werden, dass ein Zugriff auf den Inhalt des Audio- und/oder Videostreams, der durch einen vorbestimmten Typ von Daten strukturiert ist, verschafft wird.

17. Verfahren nach einem der Ansprüche 15 oder 16, **dadurch gekennzeichnet, dass** die Informationen, die dazu bestimmt sind, die Ausgangsdaten zu vervollständigen, anhand einer Auswertung der in dem Tabellenkalkulationsblatt zeitlich geordneten heterogenen Daten berechnet werden.

18. Verfahren nach einem der Ansprüche 15 bis 17, **dadurch gekennzeichnet, dass** die einer Angabe zugeordneten berechneten Informationen dazu eingerichtet sind, Zuordnungen zu dieser Angabe während des gesamten Audio- und/oder Videostreams zu erfassen.

19. Verfahren nach einem der vorhergehenden Ansprüche, **dadurch gekennzeichnet, dass** es dazu eingerichtet ist, einen gezielten Zugriff auf den Audio- und/oder Videostream und auf die diesem Audio- und/oder Videostream zugeordneten Informationen durch Auswahl eines Referenzdokuments aus einer Tabelle, welche die dem Audio- und/oder Videostream zugeordneten Referenzdokumente erfasst, zu verschaffen.

20. Verfahren nach Anspruch 19 und Anspruch 6, **dadurch gekennzeichnet, dass** es dazu eingerichtet ist, einen gezielten Zugriff auf den Audio- und/oder Videostream und auf die diesem Audio- und/oder Videostream zugeordneten Informationen durch Auswahl eines Dokuments aus einer Referenzdokumententabelle, die zu einer Referenzdokumentenklasse aus einer Vielzahl von Referenzdokumentenklassen gehört, zu verschaffen.

21. System zum Erzeugen einer Multimedia-Publikation auf der Grundlage mündlicher Darbietungen, anhand einerseits von Informationen, die in einem zuvor aufgezeichneten Audio- und/oder Videostream enthalten sind, sowie andererseits von Daten und von Referenzdokumenten, die den Audio- und/oder Videoinformationen zugeordnet sind, das das Verfahren nach einem der vorhergehenden Ansprüche durchführt, umfassend Mittel zum Indexieren des Audio- und/oder Videostreams anhand seiner Struktur und Mittel zum Indexieren der ergänzenden Daten und Referenzdokumente, so dass die ergänzenden Daten und Referenzdokumente parallel zu dem Audio- und/oder Videostream auf einer Anzeigeeinrichtung darstellbar sind, **dadurch gekennzeichnet, dass** es dazu eingerichtet ist, eine Vielzahl von Präsentationsmodi des Audio- und/oder Videostreams und/oder der zugeordneten ergänzenden Daten oder Informationen und Referenzdokumente bereitzustellen, wobei jeder Präsentationsmodus aus einer spezifischen Kombination der Indexierung des Audio- und/oder Videostreams und der Indexierung der zugeordneten ergänzenden Daten oder Informationen und Referenzdokumente resultiert, und dass die in dem zuvor aufgezeichneten Audio- und/oder Videostream enthaltenen Informationen und die Referenzdokumente und zugeordneten Daten innerhalb einer matrixartigen Informationsstruktur mit einerseits einer Zeitachse des Videos und andererseits mehreren Datentypen organisiert sind, diese Informationsstruktur um die Referenzdokumente zentriert ist, diese Referenzdokumente ermöglichen, sowohl (i) auf die relevanten Audio- und/oder Videosequenzen über die strukturelle Indexierung des Audio- und/oder Videostreams als auch (ii) auf die Gesamtheit der Referenzdokumente über die Indexierung dieser Dokumente zuzugreifen.

22. System nach Anspruch 21, **dadurch gekennzeichnet, dass** es ferner umfasst:
- Mittel zur Erfassung von Ausgangsdaten bezüglich einer Audio- und/oder Videosequenz innerhalb eines Audio- und/oder Videostreams, in einem Standardtabellenkalkulationsblattformat, mit ihrer strukturierten Beschreibung, wobei diese Ausgangsdaten Zeitcodes umfassen,
- Mittel zur Komplettierung der Ausgangsdaten durch berechnete Informationen, um jede der Daten innerhalb des Audio- und/oder Videostreams und der Struktur der Audio- und/oder Videosequenz einzuordnen,
- Mittel zur chronologischen Speicherung von Informationen über die Formalstruktur der Audio- und/oder Videosequenz und von ergänzenden Daten, die den Strukturinformationen zugeordnet sind, in einer gemeinsamen Datenbank, wobei diese Informationen und ergänzenden Daten heterogene Daten bilden,
- Mittel zur Verarbeitung der heterogenen Daten in einem Tabellenkalkulationsblatt entlang einer Zeitachse, die für den Ablauf der Zeit in dem Zeitstrom repräsentativ ist, und
- Mittel zum Generieren - mittels Sortier- und Extraktionsvorgängen, die an dem Tabellenkalkulationsblatt vorgenommen werden - einer Vielzahl von Tabellen, die dazu vorgesehen sind, einen selektiven Zugriff auf den Inhalt des Audio- und/oder Videostreams zu ermöglichen.

## Claims

1. Process for the production of a multimedia edition on the basis of oral presentations, starting, on the one hand, from information contained in a previously recorded audio and/or video flow and, on the other hand, supplementary data or information and reference documents associated with said audio and/or video information, comprising both an indexing of the audio and/or video flow, from its structure, and an indexing of said supplementary data or information and reference documents, so that said supplementary data and reference documents are displayable parallel to the audio and/or video flow on a display apparatus, **characterized in that** it also includes provision of a plurality of modes of presentation of the audio and/or video flow and/or of the associated supplementary data or information and reference documents, each mode of presentation resulting from a specific combination of the indexing of the audio and/or video flow and of the indexing of the associated supplementary data or information and reference documents and **in that** the information contained in the previously recorded audio and/or video flow and the reference documents and associated data are organized within an information structure which has the character of a matrix with on the one hand a time axis of the video and on the other hand several types of data, this information structure being centred on the reference documents, these reference documents allowing to access both (i) relevant audio and/or video sequences via the indexing of the audio and/or video flow and (ii) the reference documents via the indexing of these documents.

2. Process according to claim 1, **characterized in that** the plurality of modes of presentation includes a first mode called "Plan" corresponding to an indexing of only parts of the audio and/or video flow.

3. Process according to one of claims 1 or 2, **characterized in that** the plurality of modes of presentation includes a second mode called "Plan with documents" in which reference documents are integrated chronologically according to the indexing of the audio and/or video flow.

4. Process according to one of claims 1 to 3, **characterized in that** the plurality of modes of presentation includes a third mode called "Documents" in which the reference documents are displayed hierarchically and/or in a classified fashion.

5. Process according to claim 1, **characterized in that** the many modes of presentation includes a first mode of consultation called "whole plan" containing links to all the reference documents or supplementary information associated with the audio and/or video flow.

6. Process according to claim 5, in which the reference documents associated with the audio and/or video flow are stored in a plurality of classes of reference documents, **characterized in that** the plurality of modes of presentation includes a plurality of other modes of consultation each associated with one class of reference documents, each other mode of consultation related to a class of reference documents containing links to said reference documents contained in said class.

7. Process according to claim 6, **characterized in that** a class of reference documents includes audio and/or video sequences supplementing the audio and/or video flow.

8. Process according to claim 7, **characterized in that** the supplementary audio and/or video sequences are independent of the audio and/or video flow.

9. Process according to one of the preceding claims, **characterized in that** the information contained in the audio and/or video flow is organized to create a targeted access and an indexing of audio and/or video sequences.

10. profess according to one of the preceding claims, **characterized in that** it also comprises:
- a chronological storage, in common database devices, of heterogeneous data comprising information on the formal structure of an audio and/or video sequence contained in the audio and/or video flow, and data relating to reference documents associated with said audio and/or video sequence, and
- a processing of said heterogeneous data in a spreadsheet, along a time axis which represents the passage of time in said time flow.

11. Process according to claim 10, **characterized in that** it also comprises generation of index of means of access to fragments of the audio and/or video sequence, from supplementary data, so as to procure a consultation of audio and/or video passages associated with this supplementary data.

12. Process according to one of claims 10 or 11, **characterized in that** it also includes provision of hierarchically ordered and classified lists of supplementary data relating to specific parts of the audio and/or video flow.

13. Process according to one of claims 10 to 12, **characterized in that** it also comprises the allocation of a time code by default to any datum of the time flow not previously time coded.

14. Process according to claim 13, **characterized in that** the allocation of a time code by default to a datum not previously time coded is carried out using information time codes relating to the formal structure of the audio and/or video sequence, situated in the proximity of said not previously time-coded datum.

15. Process according to any one of the preceding claims, **characterized in that** it also comprises:
- an acquisition of initial data relating to an audio and/or video sequence within an audio and/or video flow, in a standard spreadsheet format, with their structured description, these initial data containing time codes,
- a supplementing of the initial data by information calculated so as to locate each of said data within the audio and/or video flow and the structure of said audio and/or video sequence,
- a chronological listing, in a common database, of information about the formal structure of the audio and/or video sequence and supplementary data associated with said structural information, this supplementary information and data comprising heterogeneous data,
- a processing of said heterogeneous data in a spreadsheet, along a time axis which represents the passage of time in said time flow, and
- sorting and retrieval operations carried out on the spreadsheet in order to generate a plurality of tables provided in order to allow a selective access to the contents of the audio and/or video flow.

16. Process according to claim 15, **characterized in that** the tables for selective access are generated so as to procure access to the contents of the audio and/or video flow, which is structured by a predetermined data type.

17. Process according to one of claims 15 or 16, **characterized in that** the information intended to supplement the initial data is calculated from an operation on the heterogeneous data chronologically ordered in the spreadsheet.

18. Process according to one of claims 15 to 17, **characterized in that** the calculated information associated with a datum is arranged so as to list associations with this datum all along the audio and/or video flow.

19. Process according to any one of the preceding claims, **characterized in that** it is arranged so as to procure targeted access to the audio and/or video flow and to the information relating to this audio and/or video flow, by selection of a reference document from a table listing the reference documents associated with said audio and/or video flow.

20. Process according to claim 19 and claim 6, **characterized in that** it is arranged so as to procure targeted access to the audio and/or video flow and to the information associated with this audio and/or video flow, by selection of a document from a table of reference documents belonging to a class of reference documents among a plurality of classes of reference documents.

21. System for the production of a multimedia edition based on oral presentations, from, on the one hand, information contained in a previously recorded audio and/or video flow, and on the other hand from data and reference documents associated with said audio and/or video information, putting into practice the process according to any one of the preceding claims, comprising means for indexing the audio and/or video flow, from its structure, and means for indexing said supplementary data and reference documents, in order that said complementary data and reference documents are displayable parallel to the audio and/or video flow on a display apparatus, **characterized in that** it is arranged so as to provide a plurality of modes of presentation of the audio and/or video flow and/or of the associated complementary data or information and reference documents, each mode of presentation resulting from a specific combination of the indexing of the audio and/or video flow and of the indexing of the associated complementary data or information and reference documents and **in that** the information contained in the previously recorded audio and/or video flow and the reference documents and associated data are organized within an information structure which has the character of a matrix with on the one hand a time axis of the video and on the other hand several types of data, this information structure being centred on the reference documents, these reference documents allowing to access both (i) relevant audio and/or video sequences via the indexing of the audio and/or video flow and (ii) the reference documents via the indexing of these documents.

22. System according to claim 21, **characterized in that** it also comprises:
- means for entering initial data relating to an audio and/or video sequence within an audio and/or video flow, in a standard spreadsheet format, with their structured description, this initial data containing time codes,
- means for supplementing initial data with information calculated so as to locate each of said data within the audio and/or video flow and the structure of said audio and/or video sequence,
- means for storing chronologically, in a common database, information about the formal structure of the audio and/or video sequence and supplementary data associated with said structural information, this supplementary information and data comprising heterogeneous data,
- means for processing said heterogeneous data in a spreadsheet, along a time axis which represents the passing of time in said temporal flow, and
- means for generating, by sorting and retrieval operations carried out on the spreadsheet, a plurality of tables provided in order to allow selective access to the contents of the audio and/or video flow.
